# EUROPEAN PATENT APPLICATION

(11) **EP 4 102 475 A1**
(43) Date of publication of application: **14.12.2022**
(21) Application number: 22168005.1
(22) Date of filing: 12.04.2022
(51) Int. Cl.: G06V 20/58, G06V 10/776, G06V 10/774, G06V 10/25, G06V 10/778

(54) **SENSOR DATA LABEL VALIDATION**

(30) Priority: 07.06.2021 US 202117341255
(71) Applicant: Waymo LLC, Mountain View, CA 94043 (US)
(72) Inventor: TSUI, Lo Po, Mountain View, CA 94043 (US); MINICH, Allen, Mountain View, CA 94303 (US); VAN WELIE, Megan, Mountain View, CA 94303 (US); BAROOAH, Neil, Mountain View, CA 94043 (US); ANGUELOV, Dragomir, Mountain View, CA 94303 (US)
(74) Representative: Chettle, John Edward

(57) **Abstract**

Methods, systems, and apparatus, including computer programs encoded on a computer storage medium that validates labels associated with sensor measurements of a scene in an environment. One of the methods includes receiving data representing a sensor measurement of a scene in an environment generated by one or more sensors. The sensor measurement can be associated with one or more labels, and each label can identify a portion of the sensor measurement that has been classified as measuring an object in the environment. For each of the labels, a determination can be made as to whether the label satisfies each of the validation criteria. Each validation criterion can measure whether one or more characteristics of the label are consistent with one or more characteristics of real-world objects in the environment. In response to determining that a particular label of the one or more labels does not satisfy one or more of the validation criteria, a notification can be generated indicating that the particular label is not a valid label for any real-world object in the scene of the environment.

## Description

### BACKGROUND

This specification relates to labeling sensor data.

Autonomous vehicles include self-driving cars, boats, and aircraft. Autonomous vehicles use a variety of on-board sensors and computer systems to detect nearby objects, together with trained machine learning models, to make control and navigation decisions. To ensure the proper operation of those machine learning models, objects in the data used to train the machine learning model must be labeled correctly.

### SUMMARY

This specification describes a system implemented as computer programs on one or more computers in one or more locations that validates labels associated with sensor measurements of a scene in an environment.

Particular embodiments of the subject matter described in this specification can be implemented so as to realize one or more of the following advantages.

A label validation system can increase the accuracy of labeling for large sets of sensor data, where large can be defined as thousands of images or more. This results in improved accuracy of machine learning models that are trained using the labels for the large sets of sensor data. For example, the accuracy of machine learning models deployed on-board on autonomous vehicles can be improved as a result of the improved label quality.

A label validation system can also provide immediate feedback to humans performing labeling tasks, informing the labeler of an improper practice, thus reducing the likelihood that similar errors are made repeatedly by a human labeler.

A label validation system can also validate previously entered labels against newly created labeling criteria. For example, if a labeling policy is changed after having previously labeled tens of thousands of sets of sensor measurements, only some of which now violate the new policy, a label validation system can identify only the subset of sensor data that does not comply with the new labeling policy, reducing the effort required to bring the labels into compliance with the new labeling policies.

A label validation system can also adjust validation criteria in response to received feedback. For example, if the label validation system indicates that a label does meet validation criteria, and subsequently receives confirmation from humans that the label does meet all validation criteria, the label validation system can adjust the validation criteria. Such adjustments can result in increased accuracy - that is, in fewer cases where labels are incorrectly identified as failing validation criteria.

The described techniques allow for accurate labels to be generated more quickly as the described techniques perform validation of the labels, and as a result, machine learning models deployed on the autonomous vehicle can be updated more quickly to account for newly collected training data, improving the performance of the autonomous vehicle.

One aspect features receiving data representing a sensor measurement of a scene in an environment generated by one or more sensors. The sensor measurement can be associated with one or more labels, and each label can identify a portion of the sensor measurement that has been classified as measuring an object in the environment. For each of the labels, a determination can be made as to whether the label satisfies each of the validation criteria. Each validation criterion can measure whether one or more characteristics of the label are consistent with one or more characteristics of real-world objects in the environment. In response to determining that a particular label of the one or more labels does not satisfy one or more of the validation criteria, a notification can be generated indicating that the particular label is not a valid label for any real-world object in the scene of the environment.

One or more of the following features can be included. The notification can be provided to a user device for presentation to a user. The user device can receive updated label data specifying an updated label for the portion of the sensor measurement identified by the particular label, and the updated label can be included in a set of validated labels for the sensor measurement. Prior to including the updated label data in the set of validated label data, it can be determined that the updated label satisfies all of the validation criteria. A machine learning model can be trained on training data that includes the set of validated labels for the sensor measurement. An indication that the particular label is valid for at least one real-world object in the scene of the environment can be received, and in response to receiving the indication, at least one validation criterion can be modified. An indication of a correction to the particular label can be received and in response to receiving the indication, the particular label can be modified. The indication can include a second label that is different from the label, and modifying the particular label can include replacing the label with the second label. The data representing the sensor measurement can represent at least one object in the vicinity of at least one roadway.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example system that validates labels associated with sensor data relating to scenes in an environment.
FIG. 2 is an illustration of sensor data representing a scene.
FIG. 3 is a flow diagram of an example process for validating labels.
FIG. 4 is an example of a user interface displaying results from the validation process.

Like reference numbers and designations in the various drawings indicate like elements.

### DETAILED DESCRIPTION

This specification describes how a system can validate labels associated with scenes in an environment. The labels are used to train machine learning models that guide the operation of autonomous vehicles, and the accurate labeling of objects within a scene is important to accurately train the machine learning models. Accurate training, in turn, allows for the proper navigation of an autonomous vehicle which must avoid obstacles as it traverses an environment. If an object is mislabeled, the machine learning model can be trained inaccurately, and the operation of a vehicle can be impaired. For example, if a pole or a tree adjacent to a road is labeled as a pedestrian, the machine learning model might misrecognize such objects causing an autonomous vehicle to stop to allow the "pedestrian" to cross the roadway. Since poles and trees do not actually cross roadways, the vehicle might stop progressing for no valid reason. Similarly, if the placement of a label in training data is incorrect, the machine learning model can be trained inaccurately, and the recognition system within an autonomous vehicle might fail to properly understand objects in an environment.

Data describing a scene can be generated as an autonomous vehicle traverses an environment. Sensors (such as Lidar and cameras) on the vehicle can collect sensor measurements at various points in time and at various points in space. A scene is an area within the environment, typically within close proximity of an autonomous vehicle, for which a sensor can collect measurement data at a point in time.

In real-world examples, a scene often contains a number of objects, such as road signs, lamp post, pedestrians, road cones, etc. A sensor on the vehicle can collect measurement data about the objects. However, for an autonomous vehicle to operate correctly, the on-board system of the vehicle must translate raw measurement data into recognized objects. For example, a particular Lidar scatter pattern might likely represent a lamppost, and lampposts should be avoided by autonomous vehicles. Road signs must similarly be avoided, but can also include information that should be considered when an autonomous vehicle plans its route. Lampposts contain no such information, but can be similar in size and shape to a road sign. Therefore, while the measurement data for road signs and lampposts might look similar, recognizing them as different object types is important.

Object recognition systems on an autonomous vehicle, or remote but coupled to an autonomous vehicle, translate sensor data into detected objects. Object detection systems commonly employ machine learning techniques, and more specifically, machine learning models that are trained on labeled scene data.

Labels can identify one or more of (i) an object category to which an object belongs (for example, e.g., vehicle, pedestrian, cyclist, road sign, and so on), or (ii) "bounding boxes" or other regions that identify the portion of the sensor measurement that corresponds to the detected object. Labels can be created by users or by systems configured to create labels for scenes automatically.

If scene data used for training a machine learning model are labeled inaccurately, for example, labeling a road sign as a lamppost, the machine learning model can produce inaccurate object detection. Thus, the correct operation of an autonomous vehicle relies, at least in part, on the accurate labeling of scene data.

Since accurately training machine learning models can require large data sets, often in the millions of instances, labeling these data sets, which is frequently performed by humans, requires substantial effort. In addition, since humans are fallible, especially when performing a large number of tasks, labeling errors inevitably arise.

In addition, the universe of objects, and therefore valid labels, can change over time. For example, if cars have traditionally been no more than 7 feet wide, if an object is labeled "car," and the object is over 7 feet wide, then that label is presumptively incorrect and will be marked as invalid. However, if a new model of car is introduced that is over 7 feet wide, then such a label can be correct, and the label evaluation criteria must change.

Furthermore, labeling policies can change over time. For example, a labeling policy might state that lamp posts, fire hydrants, mail boxes, etc. are all to be labeled "stationary obstacle." Later, the labeling policy might be adjusted to require specific labeling for each type of stationary obstacle - that is, lamp posts are marked "lamp post", mail boxes as "mail box", and so on. In such cases, it is necessary to quickly locate scenes that no longer comply with adjusted labeling policies so corrected labels can be applied.

Therefore, it is beneficial to the quality of the training data used to train machine learning models employed by autonomous vehicles to identify instances where labels are incorrect, perhaps because a human erred, a policy changed, or other reasons, and to allow the labels to be corrected. Once a scene is labeled, the system can validate the labels, and create a notification when a label is not a valid label for any real-world object in the scene. For example, if an "open car door" label is associated with a part of a scene that does not contain a car, the system can create a notification that the label is likely invalid. As noted above, ensuring proper labeling of objects in an environment is important to the operation of an autonomous vehicle.

More specifically, the techniques described in this specification result in more accurate labeling of sensor data, which improves the quality of the data used to train the machine learning models used by autonomous vehicles. Improving the quality of training data results in more accurate trained machine-learning models. When autonomous vehicles use such improved models, the autonomous vehicle can make improved driving decisions.

Optionally, the system can receive feedback from a user regarding the accuracy of a notification and adjust the validation criteria. For example, if the system is configured such that objects marked "car" can be no longer than 7 feet in width, and the system encounters an object of width 7.5 feet, the system can generate a notification that label is likely invalid. If the system receives an indication that the label is correct, perhaps because a new model of car is especially wide, the system can adjust the validation criteria to permit cars of width up to 7.5 feet.

These features and other features are described in more detail below.

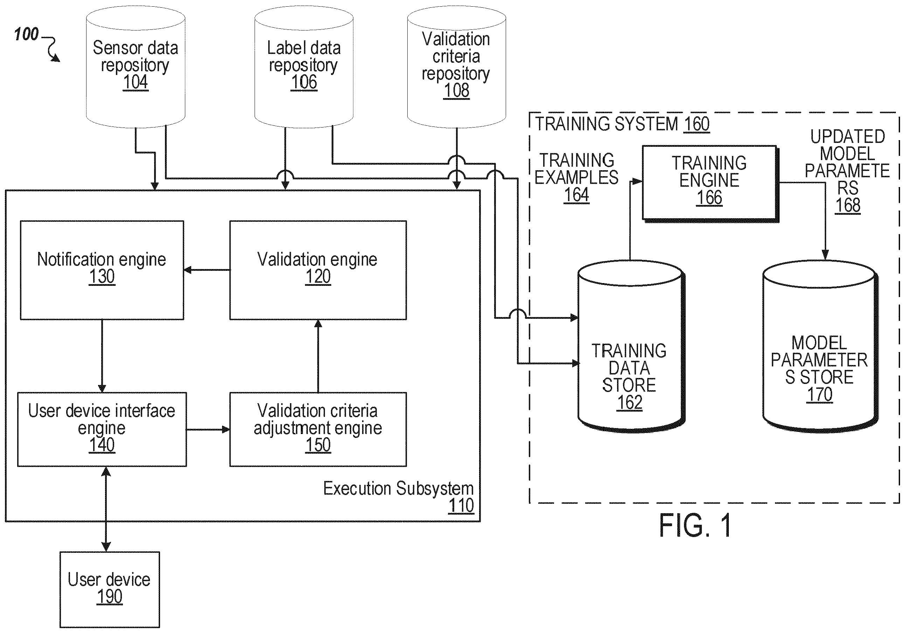

FIG. 1 is a block diagram of an example label validation system 100. The label validation system 100 is an example of a system implemented as computer programs on one or more computers in one or more locations, in which the systems, components, and techniques described below can be implemented.

The label validation system 100 can include multiple repositories, including: a sensor data repository 104, a label data repository 106 and a validation criteria repository 108.

A "repository", as used in this specification, can refer to any appropriate type of logical or physical data storage within which data can be stored. For example, a repository can be implemented using a file system in which data are stored in files, and data can be stored and retrieved using file system operations. A file system can be stored on one computer system, or on multiple computer systems connected by a network. In another implementation, a repository can be a database, such as a relational database, and data are stored and retrieved using database operations, for example, expressed as SQL (structured query language) commands. A database can be stored on one computer system, or on multiple computer systems connected by a network. A repository can be stored on the same computer as the system, or it can be stored on a different computer. Further, a repository can include multiple data storage units. For example, data associated with one repository might exist in multiple relational databases each stored on a different computers. Alternatively, a repository can include both relational database tables and files in a file system. In addition, a repository can refer to one or more areas of computer memory, such as random access memory (RAM), present in one or more computer systems. A repository in this specification can also refer to combinations of all such implementations listed above and/or to other data storage techniques alone or in combination.

The sensor data repository 104 contains sensor data obtained from sensors on autonomous vehicles that have traversed the area or from other sensor in the area. For example, the sensor data can include data obtained from one or more laser sensors (e.g., LIDAR laser sensors) that are configured to detect reflections of laser light. As another example, the sensor data can include data from one or more radar sensors that are configured to detect reflections of radio waves. As another example, the sensor data can include data from one or more camera sensors that are configured to detect reflections of visible light. The sensor data can result from the transmission of one or more pulses of electromagnetic radiation in a particular direction that can be used to measure the intensity of any reflections as well as the time at which the reflection was received. Sensor data can also include data computed from the sensor data described above. For example, distance can be computed and included in the sensor data by determining the time which elapses between transmitting a pulse and receiving its reflection.

The label data repository 106 contains labels that have been associated with sensor data. For example, if sensor data indicate a lamppost, the label "lamppost" can be included in the label data repository. Label data are typically created by users who label sensor data. Label data can also include bounding boxes, as described further below.

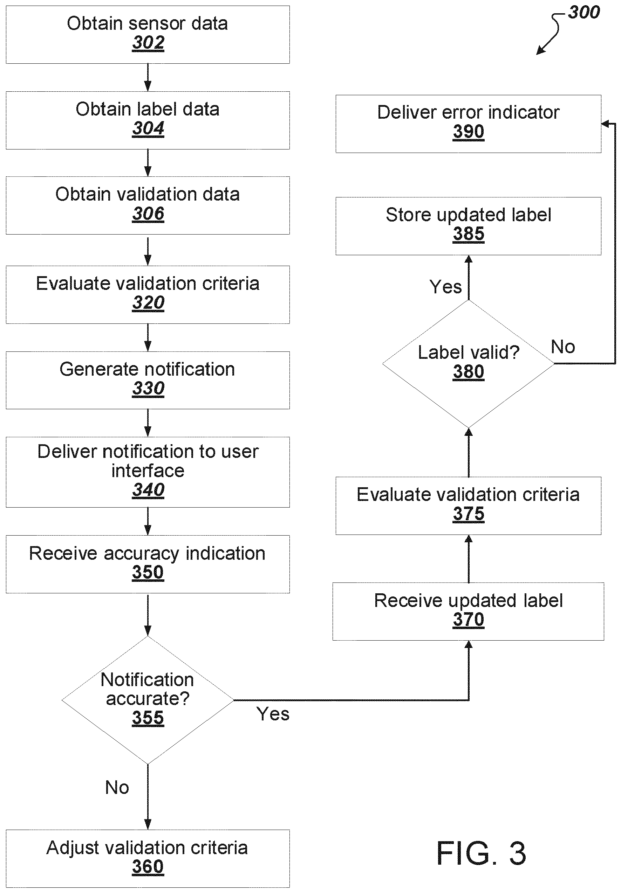

The validation criteria repository 108 contains criteria used to validate labels. For example, the criteria can be expressed as rules against which labels are validated. (Validation criteria are described further in reference to FIG. 3.)

The label validation system 100 can also include an execution subsystem 110 that validates, according to validation criteria, the label data associated with sensor data, and interacts with one or more user devices. The execution subsystem 110 can include a validation engine 120, a notification engine 130, a user device interface engine 140 and a criteria adjustment engine 150.

The label validation system 100 can also include or communicate with a training system 160 which can be used to train one or more machine learning models that are used to guide the operation of autonomous vehicles. The training system can include a training data store 162, a training engine 166 and a model parameter store 170.

The execution subsystem 110 can retrieve sensor data from the sensor data repository 104, label data associated with sensor data from the label data repository 106, and validation criteria from the validation criteria repository 108. The execution subsystem 110 can validate the labels by using the validation criteria, such as validation rules, and notify a user device 190 when a label validation fails.

When a label validation fails, a user associated with the user device 190 can choose to adjust the label, which can cause an update in the label data repository 106, as described further in reference to FIG. 3.

In cases where the label validation system 100 incorrectly indicates that a label is invalid, the execution subsystem 110 can notify a user associated with a user device 190, who can adjust the validation criteria in the validation criteria repository.

The execution subsystem 110 can receive sensor data from the sensor data repository 104. Sensor data can include, for example, readings from a Lidar system, images from a camera, or frames from video captured by a video camera, as described above.

The execution subsystem 110 can also receive label data associated with the sensor data from a label data repository 106. Optionally, the sensor data repository 104 and the label data repository 106 can be the same repository.

The execution subsystem 110 also receives validation criteria from a validation criteria repository 108. While the sensor data repository 104, the label data repository 106 and the validation criteria repository 108 are illustrated as outside the execution subsystem, one, some or all can reside within the execution subsystem 110.

The validation engine 120 in the execution subsystem 110 can evaluate validation criteria against the labels associated with the sensor measurement of a scene. When the validation engine 120 determines that validation failed for a label, the notification engine 130 can create a notification indicative of the validation failure. A notification can be a message, intended for display on a user device 190, that notifies one or more users that a label associated with a sensor measurement did not satisfy at least one validation criterion.

The notification engine 130 can provide the notification to the user device interface engine 140, which can cause the notification to be displayed on at least one user interface device 190. In response, the user can adjust the label by submitting one or more inputs on the user interface 190, and the execution subsystem 110 can store the adjusted label in the label data repository 106 and/or the training data store 162. The system can update the user interface to remove the notification of the error. As described above, improving the accuracy of labels improves the quality of the data used to train one or more machine learning model used to navigate by an autonomous vehicle.

Alternatively, if a user associated with the user device 190 determines that a label was correctly applied to sensor data, and therefore the notification incorrectly indicated that the label was invalid, a user can provide, through the user interface device 190, an indication of corrected validation criteria to the validation criteria adjustment engine 150. The validation criteria adjustment engine 150 can adjust at least one validation criterion associated with a label in response to receiving an indication that the label associated with a sensor measurement of a scene is correct. Optionally, the validation criteria adjustment engine can adjust validation criteria only if the number of reports of erroneous notifications exceeds a configured threshold, for example, if more than one user submits the indication of corrected validation criteria. Validation criteria adjustment is described further in reference to FIG. 3.

The training system 160 includes a training data store 162 that stores training data used to train a machine learning model. The training examples 164 include validated labels and bounding boxes associated with sensor data.

The training data store 162 provides training examples 164 to a training engine 166, also housed in the training system 160. The training engine 166 uses the training examples 164 to update the model parameters of the machine learning model, and provides the updated model parameters 168 to the model parameters store 170. Once the parameter values of the model have been fully trained, the training system 160 can send the trained parameter values to, for example, a control system associated with an autonomous vehicle.

The training system 160 is typically hosted within a data center (not shown), which can be a distributed computing system having hundreds or thousands of computers in one or more locations.

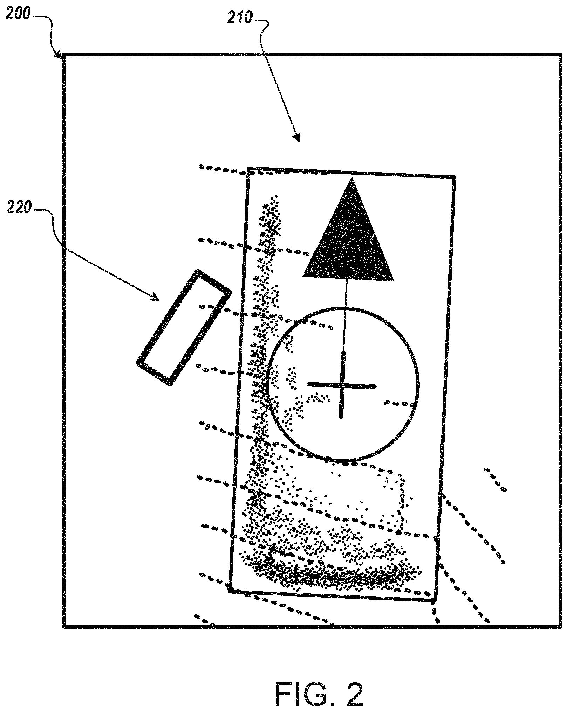

FIG. 2 is an illustration of sensor data representing a scene 200 in which a validation criterion is likely to fail. The scene has been labeled by a user as including two objects: a car, which is represented in the sensor data by the area contained within the first bounding box 210, and an open car door represented in the sensor data by the area contained within the second bounding box 220.

A relevant validation criterion might indicate that an open car door must be connected to a car object in order for the "open car door" label to be valid. In this example, the first bounding box 210 (for the car) and the second bounding box 220 (for the open door) are disjoint, which can indicate that the open car door is not connected to the car itself. In such cases, the placement of the second bounding box 220 is likely incorrect since open car doors must be connected to some car (according to the validation criterion). In the representation of the data, the bounding box 210 surrounding the car is not bold, indicating that no violation was detected, while the bounding box 220 surrounding the door is in bold, indicating a potential violation. While the indication of a violation is indicated by bold lines in this illustration, alternate representations such as shading, color, a pop-up dialog, alt text, etc. can also be used. In addition, in response to a user modifying a label such that the label no longer violates any validation criteria, the system can alter the display of the bounding box to remove the error indicator, for example, by changing the line from bold to non-bold or altering coloring or shading.

In response to determining that the label for the second bounding box 220 violates the criterion, the label validation system can produce a notification that can include an indication of the particular instance of sensor data, the labels relevant to the validation failure, and an indication of the specific failure, i.e., an indication of the criterion or criteria violated by the label, in this case, "open door disjoint from car object." The label validation system can evaluate the criteria in real-time - that is, within a threshold amount of time, such as 5 seconds or 1 minute, of the user submitting the label to the system - and immediately display indications in a user interface panel.

FIG. 3 is a flow diagram of an example process for validating labels. For convenience, the process 300 will be described as being performed by a system of one or more computers located in one or more locations. For example, a label validation system, e.g., the label validation system 100 of FIG. 1, appropriately programmed, can perform the process 300.

The system obtains 302 sensor data. As described previously, sensor data can include data generated by sensors commonly included in autonomous vehicles such as Lidar data, static images from a camera, video from a video camera, or data from other sensors such as lasers or sonic devices. Sensor data can be obtained from one or more repositories containing sensor data, as described in reference to FIG. 1. For example, if the sensor data are stored in a relational database, the system can retrieve the sensor data using SQL operations.

The system also obtains 304 label data from a label data repository. As described previously, a label can identify an object category to which an object belongs, a bounding box that identifies the portion of the sensor measurement that corresponds to the detected object, or both. An object category label can indicate the type of object represented in the sensor data, such as "pedestrian" or "tree." A bounding box can depict the boundaries of an object represented in the sensor data. Alternatively or in addition, the system can obtain label data as the labels are being created by a user of the system.

The system further obtains 306 validation criteria. Validation criteria can include validation rules, one or more trained machined learning models, or other forms of validation criteria.

When validation criteria include rules, each rule can specify, for one or more corresponding object categories, one or more constraints that must be satisfied when a label indicates that a portion of a sensor measurement is of the corresponding object category, as described below.

Some validation criteria can also be dependent on the output of one or more trained machine learning models such as a trained object detection model that identifies bounding boxes in scene data that depict objects, as described further below. The machine learning model can trained on a data set of labeled sensor data using conventional ML training techniques.

The system can obtain data from any of the repositories listed above using conventional techniques. For example, if the repository is one or more tables in a relational database, the system can obtain the data using SQL queries. Alternatively, if the repository is a file in a file system, the system can obtain the data using file system APIs provided by an operating system.

Having obtained sensor data, label data and validation criteria, the system evaluates 320 validation criteria. For each of one or more labels, the system determines whether the label satisfies each of a plurality of validation criteria, wherein each validation criterion measures whether one or more characteristics of the label are consistent with one or more characteristics of real-world objects in the environment. In response to determining that a particular label of the one or more labels does not satisfy one or more of the validation criteria, the system can generate a notification indicating that the particular label is not a valid label for any real-world object in the scene of the environment.

In some implementations, the validation criteria are rules stated as assertions about label data associated with sensor measurements. The rules can specify relationships among various combinations of label data associated with sensor measurements, aspects of a roadway, and other available data. The system can test assertions against at least one label or bounding box associated with an item of sensor data relating to a scene.

For example, as stated above, some can rules specify that sensor measurements that are assigned a specified label must have a specified relationship to specific aspects of a roadway as identified in a road graph characterizing the roadway. In this example, an assertion might state that "light posts cannot be located in travel lanes." For a label relating to the location of a "light post," the system determines whether the light post in the scene is located in a travel lane. If so, the system determines that the relevant validation criterion within the validation criteria is not satisfied.

In a second example, some rules can specify that sensor measurements that are assigned a specified label must have a specified relationship with a portion of a sensor measurement that is assigned a different label. In this example, a rule might state "open door must touch car" or "bounding box for cars must touch the ground."

In a third example, some rules can determine whether the properties of the portion of a sensor measurement assigned a given label satisfy one or more constraints on the values of those properties. "Car width less than 7 feet" is an example of such a rule.

In some implementations, the rules can be implemented as programs. Such program can take label a label as input, evaluate the rule, and output whether the label meets the criterion expressed in the rule.

As stated above, in some implementations, the validation criteria include those that are based on outputs generated by one or more trained machine learning models. The system can execute the trained machine learning model against the sensor data from the scene to determine the likelihood that the label is correct. If the determined likelihood does not satisfy a configured threshold, then the system determines that the relevant validation criterion is not satisfied. For example, the bounding box associated with any label can be required to have a threshold level of overlap with a bounding box generated by a machine learning model by processing the sensor data, where the level of overlap can be defined as intersection over union - that is, the area of overlap between the bounding box associated with a label and the bounding box generated by a machine learning model divided by the total area covered by bounding box associated with a label and the bounding box generated by a machine learning model. If the level of overlap does not satisfy the threshold value, the system can determine that the relevant validation criteria are not satisfied. The system can also execute multiple machine learning models, each configured to enforce different, or overlapping, criteria. In some implementations, a determination by any of the machine learning models that a validation criterion is not satisfied causes the system to determine that the validation criteria are not satisfied.

The system can execute step 320 in response to receiving a particular item of sensor data, one and/or more items of label data associated with an item of sensor data. This mode of execution is consistent with validation of labels as they are added.

Additionally or alternatively, the system can evaluate the criteria on labels generated by a user before the labels are associated with sensor data in the sensor data repository, omitting step 302. In this implementation, the system determines whether each label is valid before associating it with sensor data, potentially avoiding cases where other systems accessing the label data rely on information that has not yet been validated.

In addition or in the alternative, the system can execute step 320 in response to receiving an indication that the system should evaluate the validation criteria on a plurality of items of label data that have already been associated with a plurality of items of sensor data. In cases where validation criteria changes, such as when labeling policies are updated or when part of the validation criteria has changed, it can be advantageous to have the system evaluate the validation criteria against sensor data that has already been labeled. Such a step can help ensure that labels have been validated against the most recent validation criteria.

In response to determining that the validation criteria are not satisfied, the system generates 330 a notification. The notification is intended to inform a user that the validation failed. Data associated with the notification can include an indication of the sensor data, validation criteria and label(s) that caused the validation criteria not to be satisfied.

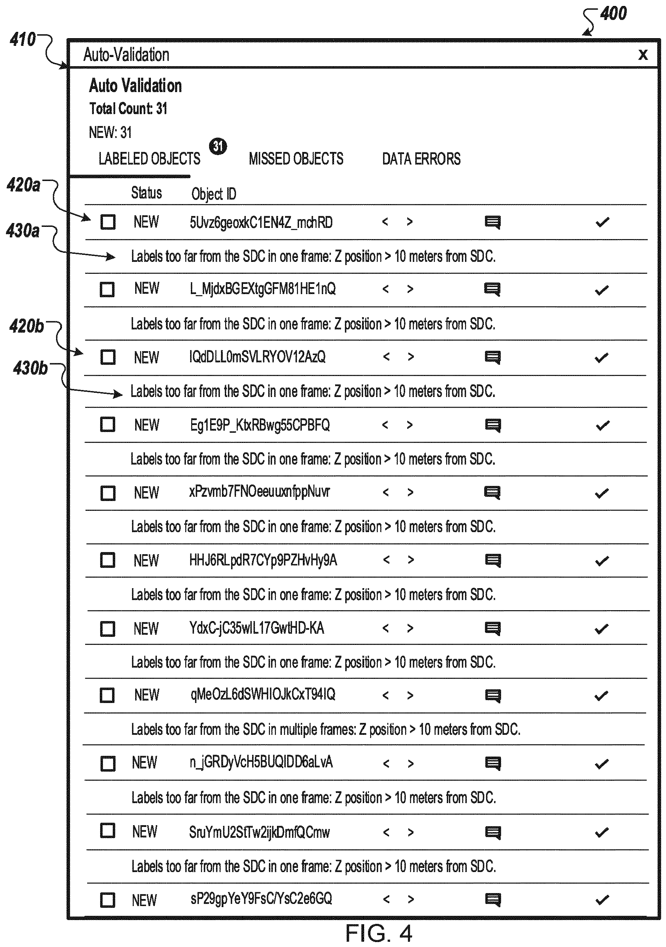

The system provides (340) the notification to a user interface device on which data included in the notification, or referenced by the notification, can be displayed. A user interface device can include a mobile device (such as a mobile telephone or a tablet), a personal computer (such as desktop or laptop), or other user interface devices. Optionally, the system can cause the display of information relating to the validation criteria that were not satisfied on a user interface device, for example, the user interface panels illustrated in FIGS. 2 and 4. The information can include a visual representation of the issue, such as the relevant sensor data along with the corresponding bounding box highlighted in bold or in a color such as red. The information can also include indications of the criteria that were not satisfied, along with recommendation regarding steps the user can take to address the issue.

In step 350, the system can optionally receive an accuracy indication that specifies that the notification was either accurate or inaccurate. For example, a user can provide the accuracy indication by interacting with a user interface panel, such as the panel illustrated in FIG. 4. The system can receive the indication of an accuracy indication from a user interface device or retrieve the accuracy indication from a data storage repository.

The accuracy indication can include data associated with the notification that was determined to be either accurate or inaccurate. For example, it can include the data associated with the notification provided in step 340 or a reference to those data. The accuracy indication can also include additional data, as described below.

In decision step 355, the system determines whether the accuracy indication is associated with an indication of an accurate notification or an indication of an inaccurate notification. If the system determines the indication is associated with an indication of an accurate notification, the system proceeds to step 370; if the system determines the indication is associated with an indication of an inaccurate notification, the system proceeds to step 360.

In step 360, the system can respond to receiving an indication of an inaccurate notification. In some implementations, the system can respond only after a configured threshold of notifications of an inaccuracies relating to the same label are received. If the system responds only after a threshold number of notification of an inaccuracies is received, the system can maintain a counter for each label, increment a counter when an indication of an inaccurate notification is received, and act when the counter reaches the threshold (also resetting the counter to zero). Optionally, in response to receiving an indication of an inaccurate notification, the system can update a user interface panel, such as the panel illustrated in FIG. 4, to remove any indication of a criteria violation.

A notification can be inaccurate when part of the validation criteria do not match possibilities in the real-world. For example, if all cars are under 7 feet in width at the time validation criteria is loaded into the system, and a car manufacturer subsequently release a car that is 7.5 feet wide, the validation criteria will not match a valid real-world scene that contain the new car model - that is, an actual car with width 7.5 feet when the validation criteria requires cars to be less than 7 feet in width. In such cases, the system can receive (350) an indication that the notification was inaccurate, allowing the validation criteria to be adjusted either by a user or by the system itself.

The accuracy notification can include or refer to data describing the inaccuracy. Continuing the example from above, the accuracy indication can include data indication that the minimum valid width for a car should be at least 7.5 feet.

If the system uses rules that include assertions, the system can use the data in the accuracy indication to retrieve the inaccurate assertion, and adjust the assertion to comply with the real-world observation. In the continuing example, the system adjusts the assertion "car width less than 7 feet" to be "car width less than or equal to 7.5 feet."

If the system uses one or more trained machine learning models, the system can retrain the models using the sensor data and label associated with accuracy indication, for example, by using it as a positive example for a traditional classification machine learning model.

The system can then use the updated validation criteria in subsequent cases where the system evaluates validation criteria (as in step 320).

In step 370, the system has received an indication that the notification was accurate -- i.e., the label was incorrect - and the system can then receive data that includes an indication of an updated label. Alternatively, in response to receiving the indication, the system can retrieve an updated label from a data repository or from a user interface device. In another alternative, the updated label can instead be included in the accuracy indication received in step 350.

In step 375, the system can validate the updated label using the process described in reference to step 320.

In decision step 380, the system determines whether the updated label is valid. If the label is valid, the system proceeds to step 385; if the system is invalid, the system proceeds to step 390.

In step 385, the system can store data associated with the updated label in the label data repository. The system can either update the data associated with the label, or add the new label data and remove the existing (incorrect) label data.

In step 390, the system can produce an indication that the updated label did not satisfy the validation criteria. The system can, for example, add a descriptive entry to an error log and/or produce an error message for display on a user interface device.

In some implementations, rather that entering step 390, the system can instead enter step 330 in which the system generates the notification and continues executing the process from 330.

Optionally, the system can gather data related to the accuracy of labelers. For example, after completing step 320, if the system determines that a label is inaccurate, the system can store an indication of the inaccurate label, optionally associated with an identifier of the user who created the label. The system can provide the collected information to users, enabling the users to improve their labeling accuracy.

FIG. 4 is an example of a user interface displaying results from the validation process.

The user interface panel 410 is produced by the validation system for display on a user interface device and includes a set of rows associated with cases where validation criteria were not satisfied. For example, row 420a indicates that a validation criterion was not satisfied for the object with an ID that begins "5Uvz." Below row 420a is a text description 430a reflecting the nature of the error, in this case noting that, "the label is too far from the SDC" (self-driving car). Similarly, row 420b indicates that a part of the validation criteria was not satisfied for the object with an ID that begins "IQjd." Below row 420b is a text description 430b reflecting the nature of the error, in this case also noting that, "the label is too far from the SDC." More specifically, each row can correspond to a violation of validation criteria, and can be associated with a bounding box that can be depicted using a visual indicator of an error, such as a bold bounding box surrounding the car door 220 in FIG. 2, and indicators other than bold, or in addition to bold, such coloring the bounding box red, can also be used

A user can interact with the user interface provided by the label validation system. For example, a user can select a row (e.g. 420a) displayed in the user interface, and in response, the label validation system can produce user interface data that, when displayed on a user interface device, can allow the user to modify the label indicated by the selected row. To simplify the process of modifying the label, the label validation system can generate user interface data that includes the relevant sensor data associated with the selected label. In addition, in response to a user selecting a row, for example, by clicking on it, the system can present a user interface panel, such as the panel illustrated in FIG. 2, with focus directed to the bounding box that does not satisfy the validation criteria. Similarly, if a validation criterion was not satisfied due to a missing bounding box, in response to a user selecting the corresponding row in the user interface, the system can display the sensor data with an indication of the approximate location a bounding box that is needed to satisfy the validation criteria. In response to receiving, from the user interface display, the modified label, the label validation system can modify the label, as described in reference to FIG. 3. If the modified label satisfies the validation criteria, the corresponding row can be removed from the list of rows in the user interface panel 410 that lists the cases where validation criteria were not satisfied.

In another example, the label validation system can produce user interface data that allows a user to select a row and specify that the indication that the validation criteria were not satisfied is incorrect - i.e., the label was properly assigned. In response to receiving, from the user interface display, that indication, the label validation system can respond as described in reference to FIG. 3.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
receiving data representing a sensor measurement of a scene in an environment generated by one or more sensors, wherein the sensor measurement is associated with one or more labels, each label identifying a respective portion of the sensor measurement that has been classified as measuring an object in the environment;
for each of the one or more labels, determining whether the label satisfies each of a plurality of validation criteria, wherein each validation criterion measures whether one or more characteristics of the label are consistent with one or more characteristics of real-world objects in the environment; and
in response to determining that a particular label of the one or more labels does not satisfy one or more of the validation criteria, generating a notification indicating that the particular label is not a valid label for any real-world object in the scene of the environment.

2. The method of claim 1, further comprising:
providing the notification to a user device for presentation to a user.

3. The method of claim 2, further comprising:
receiving, from the user device, updated label data specifying an updated label for the portion of the sensor measurement identified by the particular label; and
including the updated label in a set of validated labels for the sensor measurement.

4. The method of claim 3, further comprising:
prior to including the updated label data in the set of validated label data, determining that the updated label satisfies all of the validation criteria.

5. The method of claim 3 or 4, further comprising:
training a machine learning model on training data that includes the set of validated labels for the sensor measurement.

6. The computer-implemented method of any preceding claim further comprising:
receiving an indication of a correction to the particular label; and
in response to receiving the indication, modifying the particular label.

7. The computer-implemented method of claim 6 wherein the indication includes a second label that is different from the label, and modifying the particular label comprises replacing the label with the second label.

8. The computer-implemented method of any preceding claim further comprising:
receiving an indication that the particular label is valid for at least one real-world object in the scene of the environment; and
in response to receiving the indication, modifying at least one validation criterion.

9. The computer-implemented method of any preceding claim wherein the data representing the sensor measurement represent at least one object in the vicinity of at least one roadway.

10. One or more non-transitory computer-readable storage media storing instructions that when executed by one or more computers cause the one or more computers to perform operations comprising the method of any of claims 1-9.

11. A system comprising one or more computers and one or more storage devices storing instructions that when executed by the one or more computers cause the one or more computers to perform operations comprising the method of any of claims 1-9.
